# EUROPEAN PATENT APPLICATION

(11) **EP 0 736 245 A1**
(43) Date of publication of application: **09.10.1996**
(21) Application number: 96105410.3
(22) Date of filing: 04.04.1996
(51) Int. Cl.: A01G 3/053, B29C 45/14

(54) **Protective sheath made of plastic, particularly for hedge trimmer blades, and method for manufacturing it**

(30) Priority: 07.04.1995 IT VI950033 U
(71) Applicant: VALEX S.P.A., I-36015 Schio, Vicenza (IT)
(72) Inventor: Spillere, Antonio, 36030 - Villaverla (Vicenza) (IT)
(74) Representative: Forattini, Amelia

(57) **Abstract**

A protective sheath made of plastic, particularly for blades of hedge trimmers, includes a container (1) that has an essentially tubular side wall (2), which has a longitudinal axis (a) and a closed end wall (3) and is obtained by a method for injection-molding plastic material in a pasty state in the interspace of a mold that is composed of a male part that can be inserted coaxially in a cavity of a female part. At the closed end (3), the container has a hole (11) that is formed by a centering pin (104) located at the free end of the male part with respect to the female part during molding to ensure constancy of the thickness of the container. The hole (11) is removably closed, in a liquid-tight manner, by a removable plug (12) that is made of a elastomer material that is relatively more flexible than the basic material of the container. The method ensures a constant thickness of the sheath and is extremely cheap.

## Description

The present invention relates to a protective sheath made of plastic, particularly for hedge trimmer blades and similar products, and to its production method.

It is known that many gardening tools, such as for example hedge trimming tools, have straight steel blades that are subject to oxidation due to the effects of weather. Accordingly, it is necessary to protect the blades against the weather, by covering them with oil or immersing them in a lubricant when not in use. Sheaths or tubular cases, appropriately shaped to accommodate the blades and generally supplied as accessories of the corresponding tools, have been provided for this purpose.

Most conventional sheaths are made of plastic and are produced by thermoforming or blow-molding. Both of these methods use semifinished parts made of plastic, which have a flat or tubular shape and are preheated and molded by means of adapted molds.

Cases produced with these methods have a relatively high manufacturing cost, caused by the use of these semifinished parts.

An alternative manufacturing method that partially achieves this aim is constituted by hot-molding, in which the plastic material in the granular state is preheated and brought to a pasty state, then injected in a suitable molding fixture to achieve the finished product directly in a single stage.

This method requires a molding fixture, of a per se known type, constituted by a female mold part that can be coupled to a male mold part, or core, that is arranged concentrically to the first mold part so as to form an interspace into which the plastic in the pasty state is then injected. After the plastic has cooled, the fixture is opened, separating the female part from the male part and extracting the finished product. A drawback of this method is constituted by the instability or deformability of the core with respect to the female mold part, caused by the considerable length of the sheath to be formed, which can produce variations in the final thickness of the wall of the final product.

The aim of the present invention is to provide a sheath manufacturing method that is cheaper than those currently used for commercially available products by simplifying and reducing the duration of the production stages and by using highly reliable molding fixtures.

Within the scope of this aim, a particular object of the present invention is to eliminate the drawbacks of the past, especially in relation to the use of cores in injection-molding fixtures that do not ensure constancy of thickness.

Another object is to obtain, with the method according to the invention, a monolithic protective sheath of a high-level quality and at a low cost.

This aim and these objects are achieved by a method for producing a protective sheath made of plastic, particularly for blades of hedge trimmers and similar products, of the type that comprises a container that is elongated and has a longitudinal axis and an end that is at least partially closed, characterized in that it comprises the steps of:
-- presetting a molding fixture that is composed of at least one male part whose shape corresponds to the inner surface of the container and can be inserted in a cavity of a female part whose shape matches the outer surface of the container, in order to form a molding interspace having a substantially uniform thickness;
-- arranging a centering pin at the free end of said at least one male part to center it with respect to the cavity of said at least one female part and ensure constancy of the thickness of the interspace in said region;
-- injecting a thermoplastic material in the molten state into the molding interspace;
-- extracting the finished container and extracting the centering pin, so as to leave a hole in the closed end of the container;
-- providing a separate closure means for the removable closure of said hole.

The method according to the invention is extremely cheap and allows to obtain a quality that is at least equal to, or better than, that of previous products. The solution of using a means for centering the free end of the male part with respect to the female mold part, without being concerned about the hole that it produces, is an absolute assurance of correct positioning of these parts and therefore of constancy in the thickness of the wall of the container.

In a second aspect, there is a protective sheath made of plastic, particularly for blades of hedge trimmers and similar products, which can be obtained with the above indicated injection-molding method and includes a container that has a substantially tubular side wall, with a longitudinal axis and an at least partially closed end wall, characterized in that the container has a substantially constant thickness also proximate to its end wall and has, on the end wall, an end hole that is the result of the provision of a centering pin during molding, and a removable plug made of flexible material to provide the liquid-tight closure of the hole.

Perfect tightness of the lubricants contained in the sheath for blade protection is thus guaranteed.

For better understanding the invention, a preferred but not exclusive embodiment of a sheath according to the invention is described hereinafter and is illustrated only by way of non-limitative example in the accompanying drawings, wherein:

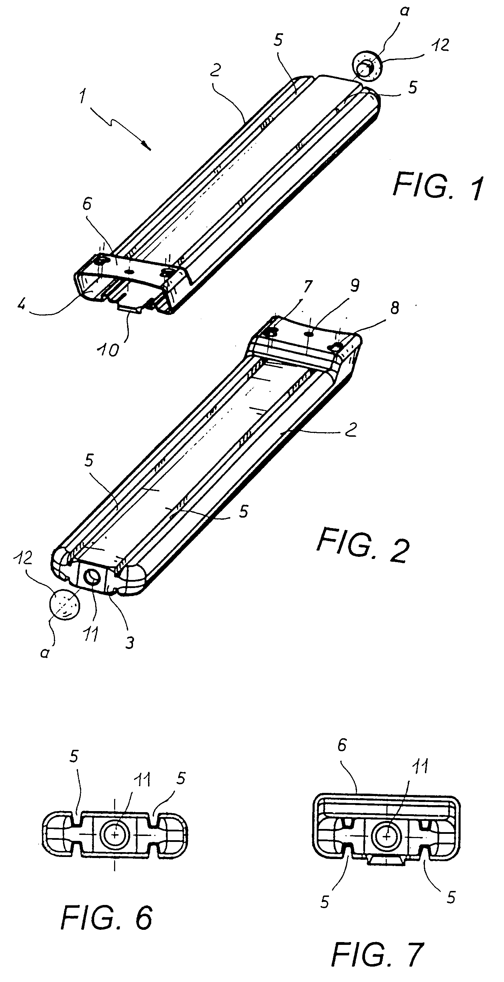

Figure 1 is a perspective view of the sheath according to the invention;
Figure 2 is a perspective view of the sheath of Figure 1, seen from the other end;

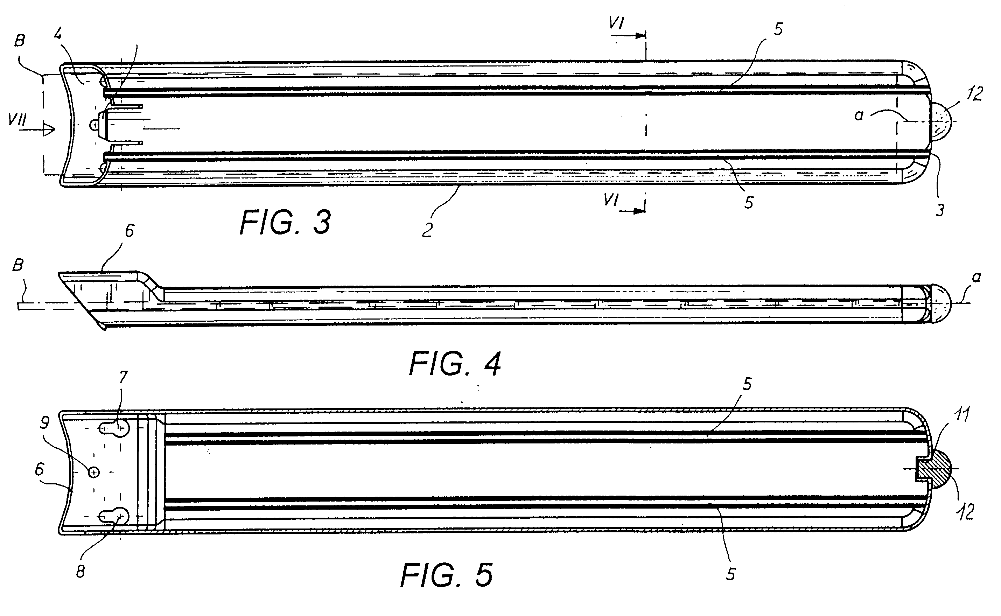

Figure 3 is a bottom view of the sheath of Figure 1;
Figure 4 is a side view of the sheath of Figure 1;
Figure 5 is a longitudinal sectional view of the sheath of Figure 4, taken along the plane V-V;

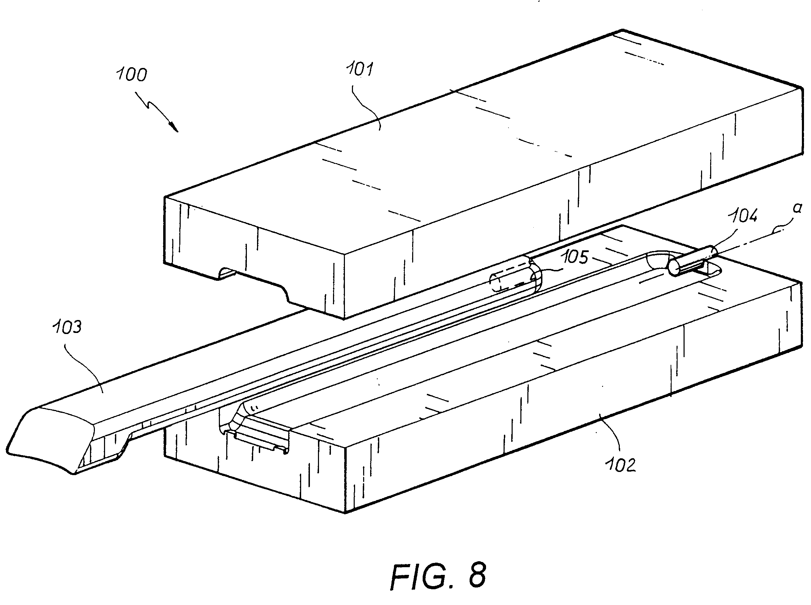

Figure 6 and 7 are longitudinal sectional views of the case of Figure 4, taken along planes designated respectively by VI-VI and VII-VII;
Figure 8 is a perspective view of a fixture for the method for manufacturing the sheath shown in the preceding figures.

With reference to the above figures, the sheath according to the invention, generally designated by the reference numeral 1, is essentially constituted by an elongated container with a longitudinal axis a and having side walls 2, a closed bottom or end wall 3, and an open end 4.

Along most of its longitudinal extension L, container 1 has an approximately rectangular transverse cross-section with rounded corners. At the longer sides of the transverse cross-section, longitudinal recesses 5 are adapted to stiffen the side walls of the container and retain the blades of the tool. These recesses are shown schematically in dashed lines and are designated by the reference letter B in the figures.

The side wall of the sheath that is proximate to its open end has a flat protrusion 6 with holes 7, 8, and 9 for anchoring the sheath to a fixed part or to an adapted support.

A hook or similar member may be provided on the opposite side relative to the flat protrusion 6, for snap-together coupling to a complementarily shaped part of the tool that supports blade B.

Container 1 is produced by injection-molding plastic in a pasty state inside a fixture that is schematically shown in Figure 8.

The fixture, generally designated by the reference numeral 100, can be formed by two female parts 101 and 102 that have internal cavities that are complementary to the upper half and the lower half of the outer surface of container 1.

A male part, or core, 103 is complementary to the inside surface of container 1 and is inserted in the space obtained by the coupling of female parts 101 and 102.

Conveniently, in order to ensure the coaxiality of the male part with respect to the inside space of female parts 101 and 102, a centering pin 104 is provided with a substantially cylindrical shape and has an end that is accommodated in corresponding semicylindrical seats of female parts 101 and 102. Pin 104 can be inserted in an axial cavity 105, shown in dashed lines in Figure 8, that is formed at the free end of male part 103.

With this simple solution, which is per se known in mold technology, the interspace between male part 103 and the spaces of female parts 101 and 102 has a strictly constant thickness s that corresponds to the thickness of side wall 2 and of end wall 3 of container 1, allowing to obtain a product that has a high final quality level.

Of course, in order to mold the container it is sufficient to close female parts 101 and 102, locate pin 104, and insert male part 103 that is coordinated with pin 104. Then one proceeds by injecting the plastic material in a pasty state, which is obtained by softening the plastic in the granular state, in the interspace thus formed. The method is extremely simple and cheap and can also use recycled materials, with undoubted advantages from the economic and environmental points of view.

Pin 104, after the closure of the mold, produces on the end wall 3 of the finished container a hole 11 whose edges are directed inward.

Conveniently, there is a plug 12 made of elastomer material, for example oil-resistant rubber, that is suitable to close hole 11 by simple pressing. The plug can be produced by a per se known hot-molding or injection-molding process.

The sheath according to the invention is susceptible of numerous modifications and variations, all of which are within the scope of the inventive concept expressed by the accompanying claims. All the details may be replaced with other technical equivalents, which are understood to be equally protected. The materials, the shapes, and the dimensions may be any according to the requirements.

## Claims

1. Method for producing a protective sheath made of plastic, particularly for blades of hedge trimmers and similar products, of the type that comprises a container that is elongated and has a longitudinal axis and an end that is at least partially closed, characterized in that it comprises the steps of:
-- presetting a molding fixture that is composed of at least one male part whose shape corresponds to the inner surface of the container and can be inserted in a cavity of a female part whose shape matches the outer surface of the container, in order to form a molding interspace having a substantially uniform thickness;
-- arranging a centering pin at the free end of said at least one male part to center it with respect to the cavity of said at least one female part and ensure constancy of the thickness of the interspace in said region;
-- injecting a thermoplastic material in the molten state into the molding interspace;
-- extracting the finished container and extracting the centering pin, so as to leave a hole in the closed end of the container;
-- providing a separate closure means for the removable closure of said hole.

2. Method according to claim 1, characterized in that said centering pin is located along the axis of the container.

3. Method according to claim 1, characterized in that said closure means consists of a removable plug made of elastomer material that is relatively more flexible than the base material of the container to close the hole in a liquid-tight manner.

4. Protective sheath made of plastic, particularly for blades of hedge trimmers and similar products, which can be obtained with an injection-molding method according to one or more of the preceding claims, comprising a monolithic container (1) with a substantially tubular side wall (2) with a longitudinal axis (a) and an at least partially closed end wall (3), characterized in that said container (1) has a substantially constant thickness even proximate to its end wall (3) and has, thereat, an end hole (11) that is the result of the provision of a centering pin (104) during molding, and a removable plug (12) made of flexible material to close said hole (11) in a liquid-tight manner.

5. Sheath according to claim 4, characterized in that the side wall (2) of said container (1) has an approximately rectangular transverse cross-section with rounded corners and has longitudinal stiffening parts (5) that protrude inward and are suitable to retain the blade (B) of a tool toward the center of the container.

6. Sheath according to claim 4, characterized in that said container (1) has holes (7, 8, 9) proximate to its open end (4), for anchoring to a fixed wall.

7. Sheath according to claim 4, characterized in that said container (1) has an engagement means (10) proximate to its open end (4), said engagement means can be removably coupled to the tool.
